# EUROPEAN PATENT APPLICATION

(11) **EP 4 474 075 A1**
(43) Date of publication of application: **11.12.2024**
(21) Application number: 23749711.0
(22) Date of filing: 30.01.2023
(51) Int. Cl.: B22D 11/115, B22D 11/04, B22D 27/02, F27D 27/00, H05B 6/18, H05B 6/44

(54) **MAGNETIC FIELD GENERATION DEVICE AND MOLTEN METAL DRIVE SYSTEM**

(30) Priority: 03.02.2022 JP 2022015921
(71) Applicant: ZMAG, Ltd., Shiroi-shi, Chiba, 270-1431 (JP)
(72) Inventor: TAKAHASHI Kenzo, Shiroi-shi, Chiba 270-1426 (JP)
(74) Representative: Page White Farrer
(86) International application number: PCT/JP2023/002854
(87) International publication number: WO 2023/149395

(57) **Abstract**

There are provided a magnetic field generation device and a molten metal stirring system capable of generating a magnetic field having sufficient strength while excelling in heat dissipation and generating a small amount of heat.

A magnetic field generation device 1 according to an embodiment includes a plurality of iron cores 11 arranged at gaps from each other, coils 21 and 22 for energizing an R-phase current, coils 23 and 24 for energizing an S-phase current, and coils 25 and 26 for energizing a T-phase current. The magnetic poles 11a to 11f of each iron core 11 are arranged along a predetermined direction to constitute first to sixth magnetic pole groups, respectively. The coils 21 to 26 are wound around each of the first to sixth magnetic pole groups.

## Description

### TECHNICAL FIELD

The present invention relates to a magnetic field generation device and a molten metal drive system, more specifically, a magnetic field generation device that generates a moving magnetic field, and a molten metal drive system that drives a molten metal using the moving magnetic field by the magnetic field generation device.

### BACKGROUND ART

Conventionally, a molten metal drive system that drives a molten metal of non-ferrous metal such as aluminum or copper (hereinafter simply referred to as "hot molten metal" or "molten metal") by an electromagnetic force is known. The molten metal drive system includes a magnetic field generation device (AC magnetic field device) that is supplied with an AC current and generates a moving magnetic field. When the moving magnetic field runs in the molten metal, an eddy current is generated in the molten metal, an electromagnetic force acts on the molten metal by the eddy current, and the molten metal is driven.

As a molten metal drive system using electromagnetic force, for example, Patent Literature 1 describes a system in which a three-phase alternating current is caused to flow through a plurality of coils wound around an annular iron core to generate a moving magnetic field, and the molten metal existing inside the annular iron core is stirred.

### CITATION LIST

### PATENT LITERATURE

Patent Literature 1: JP H2-182358 A

### SUMMARY OF THE INVENTION

### OBJECT OF THE INVENTION

In order to generate a strong moving magnetic field in the magnetic field generation device, it is conceivable to cause a large current to flow in the coil. However, the calorific value (copper loss) of the coil increases, and thus a powerful water-cooling type cooling facility is required. In the case of the water-cooled type, it is difficult to manage the water quality of the cooling water and the maintenance cost is high, which is one factor that hinders the spread of the device.

The present invention has been made based on the above technical recognition, and an object thereof is to provide a magnetic field generation device capable of generating a magnetic field having sufficient strength while excelling in heat dissipation and generating a small amount of heat, and a molten metal stirring system including the magnetic field generation device.

### SOLUTION TO PROBLEM

A magnetic field generation device according to an embodiment of the present invention includes:
a plurality of iron cores each having first to sixth magnetic poles and arranged at gaps from each other;
first and second coils for energizing an R-phase current;
third and fourth coils for energizing an S-phase current; and
fifth and sixth coils for energizing a T-phase current, in which
a plurality of the first magnetic poles included in the plurality of iron cores is arranged along a predetermined direction to constitute a first magnetic pole group,
a plurality of the second magnetic poles included in the plurality of iron cores is arranged along the direction to constitute a second magnetic pole group,
a plurality of the third magnetic poles included in the plurality of iron cores is arranged along the direction to constitute a third magnetic pole group,
a plurality of the fourth magnetic poles included in the plurality of iron cores is arranged along the direction to constitute a fourth magnetic pole group,
a plurality of the fifth magnetic poles included in the plurality of iron cores is arranged along the direction to constitute a fifth magnetic pole group,
a plurality of the sixth magnetic poles included in the plurality of iron cores is arranged along the direction to constitute a sixth magnetic pole group,
the first coil is wound around the first magnetic pole group,
the second coil is wound around the second magnetic pole group,
the third coil is wound around the third magnetic pole group,
the fourth coil is wound around the fourth magnetic pole group,
the fifth coil is wound around the fifth magnetic pole group, and
the sixth coil is wound around the sixth magnetic pole group.

In addition, in the magnetic field generation device,
the plurality of iron cores may be ring-shaped iron cores and arranged along a central axis direction, and
the first to sixth magnetic poles of each of the iron cores may protrude from an inner peripheral surface of the ring-shaped iron core toward a center, and
the first magnetic pole and the second magnetic pole may face each other, the third magnetic pole and the fourth magnetic pole may face each other, and the fifth magnetic pole and the sixth magnetic pole may face each other.

In addition, in the magnetic field generation device,
the plurality of iron cores may be U-shaped iron cores and arranged along a central axis direction,
the first to sixth magnetic poles of each of the iron cores may protrude inward from an inner surface of the U-shaped iron core, and
the first to sixth magnetic poles may be arranged in an order of the first magnetic pole, the third magnetic pole, the fifth magnetic pole, the second magnetic pole, the fourth magnetic pole, and the sixth magnetic pole.

In addition, in the magnetic field generation device,
the plurality of iron cores may be ring-shaped iron cores and arranged along a central axis direction,
the first to sixth magnetic poles of each of the iron cores may protrude outward from an outer peripheral surface of the ring-shaped iron core, and
the first magnetic pole and the second magnetic pole may extend in opposite directions to each other, the third magnetic pole and the fourth magnetic pole may extend in opposite directions to each other, and the fifth magnetic pole and the sixth magnetic pole may extend in opposite directions to each other.

In addition, in the magnetic field generation device,
the plurality of iron cores may be linear iron cores and arranged along a direction orthogonal to an extending direction of the iron cores, and
the first to sixth magnetic poles of each of the iron cores may protrude from the linear iron core in the same direction.

In addition, in the magnetic field generation device,
the plurality of iron cores may be ring-shaped iron cores having different sizes and concentrically arranged,
the first to sixth magnetic poles of each of the iron cores may protrude from the ring-shaped iron core in a same direction,
the first magnetic pole group and the second magnetic pole group may be arranged with a center of each of the iron cores interposed therebetween,
the third magnetic pole group and the fourth magnetic pole group may be arranged with the center interposed therebetween, and
the fifth magnetic pole group and the sixth magnetic pole group may be arranged with the center interposed therebetween.

In addition, in the magnetic field generation device,
magnetic poles of a same magnetic pole group of each of the iron cores may be connected to each other.

In addition, in the magnetic field generation device,
a ratio of a gap between the iron cores to a thickness of the iron core may be equal to or more than 0.1 and equal to or less than 2.

In addition, in the magnetic field generation device,
the ratio may be equal to or more than 1.

In addition, in the magnetic field generation device,
the plurality of iron cores may be constituted by a carbon steel sheet.

In addition, in the magnetic field generation device,
the first coil and the second coil may be connected in series to form a first series coil, the third coil and the fourth coil may be connected in series to form a second series coil, the fifth coil and the sixth coil may be connected in series to form a third series coil, and the first series coil, the second series coil, and the third series coil may be star-connected.

A molten metal drive system according to an embodiment of the present invention is
a molten metal drive system for driving a molten metal, the molten metal drive system including:
the magnetic field generation device;
a case that houses the magnetic field generation device; and
an AC power supply that outputs an AC current to the first to sixth coils.

In addition, in the molten metal drive system,
the case may be provided with an air inlet for taking air into the case and an air outlet for discharging air in the case to the outside, and
the air inlet and the air outlet may be disposed so as to sandwich the magnetic field generation device.

### BRIEF DESCRIPTION OF DRAWINGS

[Fig. 1] Fig. 1 is a plan view of a magnetic field generation device according to a first embodiment.
[Fig. 2] Fig. 2 is a view illustrating magnetic poles and a coil as viewed from a center of an iron core of the magnetic field generation device according to the first embodiment.
[Fig. 3] Fig. 3 is a plan view of an iron core used in the magnetic field generation device according to the first embodiment.
[Fig. 4] Fig. 4 is a side view illustrating a plurality of iron cores arranged in a central axis direction at gaps from each other.
[Fig. 5] Fig. 5 is a connection diagram of a plurality of coils included in the magnetic field generation device according to the first embodiment.
[Fig. 6] Fig. 6 is a plan view of an iron core according to a modification example of the first embodiment.
[Fig. 7] Fig. 7 is a front view of a continuous casting system including the magnetic field generation device according to the first embodiment.
[Fig. 8] Fig. 8 is a partial longitudinal sectional view of the continuous casting system including the magnetic field generation device according to the first embodiment.
[Fig. 9] Fig. 9 is a plan view of a magnetic field generation device according to a second embodiment.
[Fig. 10] Fig. 10 is a plan view of a molten metal stirring system including the magnetic field generation device according to the second embodiment.
[Fig. 11] Fig. 11 is a plan view of a magnetic field generation device according to a third embodiment.
[Fig. 12] Fig. 12 is a side view of an iron core used in the magnetic field generation device according to the third embodiment.
[Fig. 13] Fig. 13 is a partial longitudinal sectional view of a molten metal stirring system including a magnetic field generation device according to the third embodiment.
[Fig. 14] Fig. 14 is a plan view of a magnetic field generation device according to a fourth embodiment.
[Fig. 15] Fig. 15 is a plan view of a plurality of coaxially arranged iron cores used in the magnetic field generation device according to the fourth embodiment.
[Fig. 16] Fig. 16 is a cross-sectional view of the disk-shaped iron core illustrated in Fig. 15, taken along line I-I.
[Fig. 17] Fig. 17 is a plan view of a plurality of iron cores according to a modification of the fourth embodiment.
[Fig. 18] Fig. 18 is a cross-sectional view of the disk-shaped iron core illustrated in Fig. 17, taken along line II-II.
[Fig. 19] Fig. 19 is a plan view of a molten metal stirring system including the magnetic field generation device according to the fourth embodiment.

### BEST MODE FOR CARRYING OUT THE INVENTION

Hereinafter, an embodiment according to the present invention will be described with reference to the drawings. Note that, in each drawing, components having equivalent functions are denoted by the same reference numerals.

### (First Embodiment)

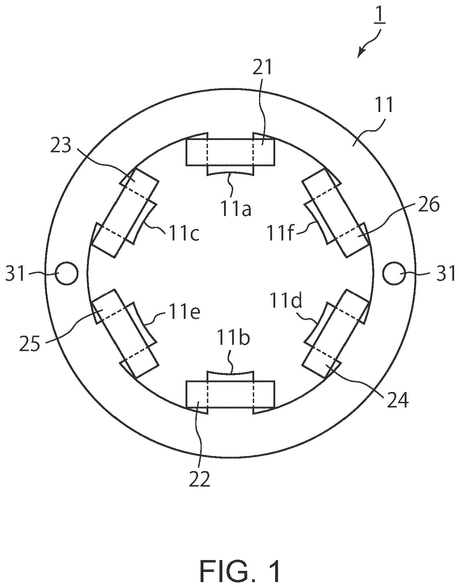

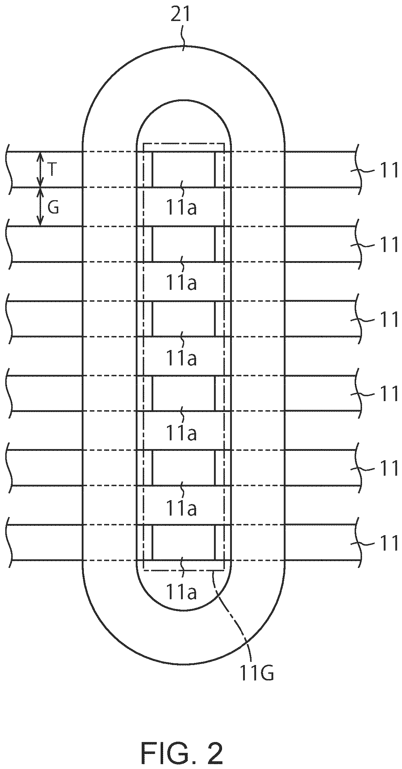

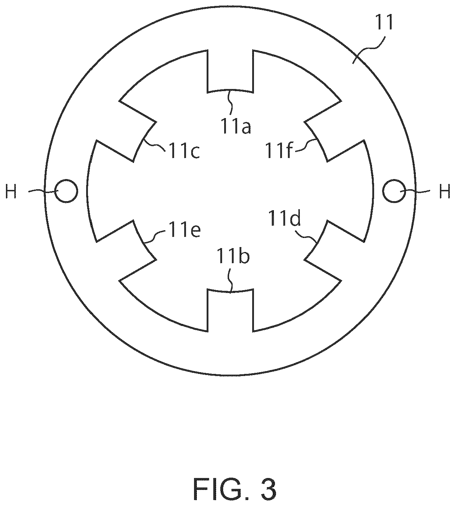

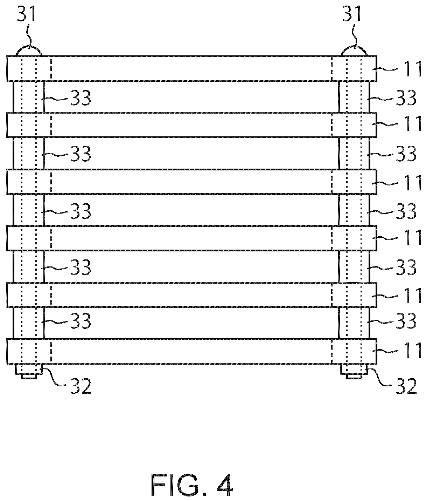

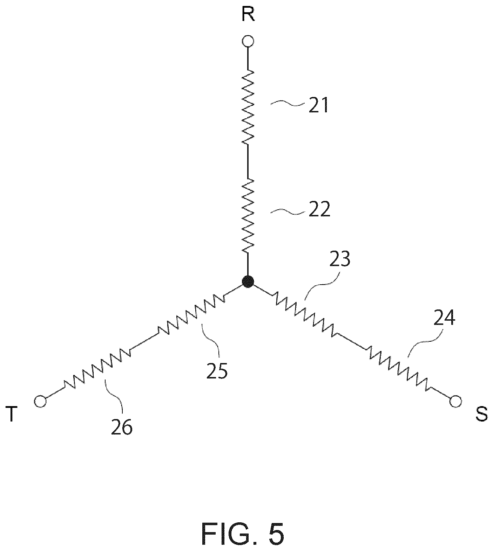

A magnetic field generation device 1 according to a first embodiment will be described with reference to Figs. 1 to 5. Fig. 1 is a plan view of a magnetic field generation device 1 according to the present embodiment, and Fig. 2 illustrates magnetic poles 11a and a coil 21 as viewed from a center of an iron core 11 of the magnetic field generation device 1. Fig. 3 is a plan view of the iron core 11 used in the magnetic field generation device 1. Fig. 4 is a side view illustrating a plurality of iron cores 11 arranged in a central axis direction at gaps from each other. Note that, in Fig. 4, coils 21 to 26 are omitted. Fig. 5 is a connection diagram of a plurality of coils 21 to 26 included in the magnetic field generation device 1.

The magnetic field generation device 1 includes the plurality of iron cores 11 arranged at gaps from each other, and the plurality of coils 21, 22, 23, 24, 25, and 26 to which a three-phase AC voltage is applied.

The iron cores 11 are ring-shaped iron cores constituted by a ferromagnetic material, and arranged along the central axis direction of the iron core 11. Each iron core 11 is formed by stacking electromagnetic steel sheets or carbon steel sheets.

Each iron core 11 is thinner than the iron core of the conventional magnetic field generation device, and thus it is possible to reduce eddy currents generated in each iron core 11 when the coil is energized. Therefore, as a material of the iron core 11, it is possible to use a carbon steel sheet which is inexpensive and easily available, instead of a thin silicon steel sheet which has a low iron loss but is relatively expensive.

Further, as illustrated in Fig. 3, the iron core 11 is provided with through holes H through which bolts 31 are inserted. Note that a gap may be provided in the ring-shaped iron core (the same applies to the ring-shaped iron core of another embodiment).

As illustrated in Fig. 3, each iron core 11 includes a plurality of magnetic poles 11a, 11b, 11c, 11d, 11e, and 11f protruding from an inner peripheral surface of the ring-shaped iron core toward the center. The magnetic pole 11a (first magnetic pole) and the magnetic pole 11b (second magnetic pole) correspond to an R-phase. The magnetic pole 11c (third magnetic pole) and the magnetic pole 11d (fourth magnetic pole) correspond to an S-phase. The magnetic pole 11e (fifth magnetic pole) and the magnetic pole 11f (sixth magnetic pole) correspond to a T-phase. The magnetic pole 11a and the magnetic pole 11b face each other, the magnetic pole 11c and the magnetic pole 11d face each other, and the magnetic pole 11e and the magnetic pole 11f face each other.

Note that, in the present embodiment, the magnetic poles 11a to 11f are provided integrally with the iron core 11, but alternatively, the magnetic poles may be members separate from the iron core 11 (the same applies to iron cores of other embodiments).

The plurality of iron cores 11 is arranged so that their central axes coincide with each other. In the present embodiment, as illustrated in Fig. 4, the plurality of iron cores 11 is stacked with spacers 33 interposed therebetween. The bolt 31 is inserted into the through hole H of each iron core, and fastens the plurality of iron cores 11 together with a nut 32. The spacer 33 is an insulating member having a thickness corresponding to a gap G between the iron cores 11. Note that the number and arrangement positions of the bolts 31 are not limited to those illustrated in Fig. 1 and the like. In addition, the plurality of iron cores 11 may be fixed at predetermined gaps from each other by other means such as a fixing jig (the same applies to a plurality of iron cores in other embodiments).

As illustrated in Fig. 2, the plurality of magnetic poles 11a included in the plurality of iron cores 11 is arranged along a predetermined direction (central axis direction) to constitute a magnetic pole group 11G (first magnetic pole group). Although not illustrated, the magnetic poles 11b to 11f also constitute respective magnetic pole groups (second to sixth magnetic pole groups) similarly to the magnetic pole 11a. That is, a plurality of magnetic poles 11b is arranged along the central axis direction to constitute a second magnetic pole group, a plurality of magnetic poles 11c is arranged along the central axis direction to constitute a third magnetic pole group, a plurality of magnetic poles 11d is arranged along the central axis direction to constitute a fourth magnetic pole group, a plurality of magnetic poles 11e is arranged along the central axis direction to constitute a fifth magnetic pole group, and a plurality of magnetic poles 11f is arranged along the central axis direction to constitute a sixth magnetic pole group.

As illustrated in Fig. 2, in the present embodiment, the gap (void) G between the iron cores 11 is substantially the same as a thickness T of the iron core 11. That is, a ratio (G/T) of the gap G between the iron cores 11 to the thickness T of the iron core 11 is about 1. Although the void is provided between the iron cores as described above, as described later, the magnetic field generation device 1 can generate a magnetic field having strength of the same degree as that in the case of using a conventional solid iron core.

Note that, in order to achieve both high magnetic field strength and high heat dissipation, the ratio (G/T) is desirably equal to or more than 0.1 and equal to or less than 2 (the same applies to the following embodiments). By setting the ratio to be equal to or more than 1, heat dissipation of the magnetic field generation device 1 can be significantly improved, and the total amount of the iron core of the magnetic field generation device 1 can be reduced to half or less. Although the magnetic field strength tends to decrease as the ratio increases, it is only required to increase the current flowing to the coils 21 to 26 or increase the number of turns of the coils 21 to 26 as necessary.

Next, the coils 21 to 26 will be described.

The coil 21 (first coil) and the coil 22 (second coil) are coils for passing an R-phase (first phase) current. The coil 23 (third coil) and the coil 24 (fourth coil) are coils for passing an S-phase (second-phase) current. The coil 25 (fifth coil) and the coil 26 (sixth coil) are coils for passing a T-phase (third phase) current.

As illustrated in Fig. 2, the coil 21 is wound around the first magnetic pole group 11G. Although not illustrated, the coils 22 to 26 are similarly wound around the second to sixth magnetic pole groups. That is, the coil 22 is wound around the second magnetic pole group, the coil 23 is wound around the third magnetic pole group, the coil 24 is wound around the fourth magnetic pole group, the coil 25 is wound around the fifth magnetic pole group, and the coil 26 is wound around the sixth magnetic pole group.

The coils 21 to 26 are connected as illustrated in Fig. 5. That is, the coil 21 and the coil 22 are connected in series to constitute a first series coil, the coil 23 and the coil 24 are connected in series to constitute a second series coil, and the coil 25 and the coil 26 are connected in series to constitute a third series coil. The first series coil, the second series coil, and the third series coil are star connected.

Note that the first series coil, the second series coil, and the third series coil are electrically connected to an R-phase terminal, an S-phase terminal, and a T-phase terminal, respectively, of an AC power supply (an AC power supply 50 to be described later). Thus, during operation of the magnetic field generation device 1, an R-phase current flows through the coils 21 and 22, an S-phase current flows through the coils 23 and 24, and a T-phase current flows through the coils 25 and 26. Accordingly, a magnetic field (rotating magnetic field) rotating around the central axis of the iron core 11 is generated in a central portion of the magnetic field generation device 1.

As described above, the magnetic field generation device 1 is driven by the three-phase AC power supply, and is configured to generate a rotating magnetic field therein. When the magnetic field generation device 1 is used, a molten metal to be driven is arranged in a central portion of a core assembly constituted by a plurality of iron cores 11. For example, when a vortex chamber is arranged in the central portion, the molten metal in the vortex chamber is rotationally driven by the rotating magnetic field to form a vortex. When a metal raw material such as chips is charged into the vortex, the metal raw material is drawn into the vortex and dissolved in the molten metal. In addition, as will be described later, a mold may be arranged in the central portion of the magnetic field generation device 1 to form a continuous casting system.

### (Operation and Effect of Magnetic Field Generation Device 1)

As described above, in the magnetic field generation device 1, the plurality of iron cores 11 is arranged at gaps G from each other, and the coils 21 to 26 are provided so as to surround the first to sixth magnetic pole groups, respectively. As described above, although there is a void between the iron cores 11, the coils 21 to 26 surround the respective first to sixth magnetic pole groups, each magnetic pole group functions as one large magnetic pole, and thus the magnetic field generation device 1 can generate a magnetic field having strength of the same degree as that in a case where there is no void between the conventional iron cores. For example, when the ratio is 1, a magnetic field of about 90 to 95% strength can be generated as compared to the case of a solid iron core without a void.

Note that the decrease in the magnetic field strength does not actually become a major obstacle in the molten metal drive system (specific examples will be described later) to which the magnetic field generation device is applied. Even if a required molten metal driving force cannot be obtained due to the decrease in the magnetic field strength, the magnetic field strength can be increased by taking measures such as slightly increasing the current flowing through the coils 21 to 26 and the number of turns of the coils 21 to 26. As described later, since the magnetic field generation device 1 has high heat dissipation and a small amount of heat generation, it is relatively easy to take such a measure.

Since there is a void between the magnetic poles in the magnetic field generation device 1, an intensity distribution of magnetic field obtained by combining the magnetic fields radiated from the respective magnetic poles has a wavy shape along the central axis direction of the iron core in the vicinity of the magnetic poles. However, at a position about 10 to 20 mm away from the magnetic pole, the surface is substantially flat along the central axis direction. Therefore, in the molten metal drive system to which the magnetic field generation device 1 is applied, the magnetic field running in the molten metal has a substantially flat intensity distribution.

Since the void is provided between the iron cores as described above, the following effects A to C can be obtained.

Effect A: Compared with a magnetic field generation device using a solid iron core having no void as in the conventional case, the surface area of the iron core (the sum of the surface areas of a plurality of iron cores) is significantly increased, so that the heat dissipation can be greatly improved. Thus, the magnetic field generation device can be cooled by air cooling. That is, it is possible to continuously operate the magnetic field generation device in an air-cooling type. As a result, the maintenance cost can be significantly reduced.

Note that, by improving the heat dissipation of the magnetic field generation device, the current density applied to the coil can be increased. Thus, if necessary, it is also possible to compensate for the decrease in the magnetic field strength due to the provision of the void between the iron cores by increasing the current flowing through the coil.

Effect B: Since the cross-sectional area of each iron core is smaller than that of the conventional magnetic field generation device, eddy currents generated in each iron core during operation of the magnetic field generation device are reduced, and the amount of heat generation is reduced. Thus, a carbon steel sheet more advantageous in terms of cost than a silicon steel sheet can be used as a material of the iron core. By using the carbon steel sheet, the cost of the magnetic field generation device can be reduced, and the weight of the magnetic field generation device can be further reduced.

Effect C: Since the total amount of iron cores required for the magnetic field generation device is reduced as compared with the conventional magnetic field generation device, it is possible to provide a magnetic field generation device that is lightweight and easy to handle. For example, when the gap between the iron cores is the same as the thickness of the iron core, the amount of the iron core is halved, and the weight of the magnetic field generation device can be reduced by about 50%. By reducing the amount of the iron core to be used, the manufacturing cost of the magnetic field generation device can also be reduced.

### (Modification of Iron Core)

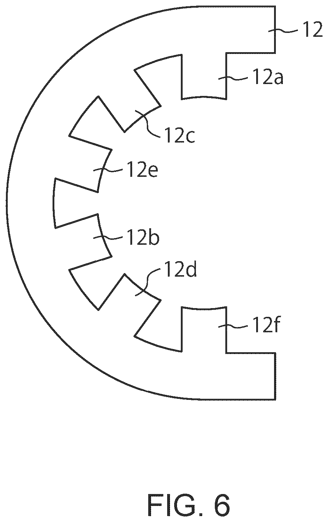

The shape of each iron core of the magnetic field generation device 1 is not limited to the ring-shaped iron core 11, and various shapes can be assumed. Fig. 6 is a plan view of an iron core 12 according to a modification of the first embodiment.

The iron core 12 is a U-shaped iron core, and six magnetic poles 12a, 12b, 12c, 12d, 12e, and 12f protrude inward from the inner surface of the U-shaped iron core.

As illustrated in Fig. 6, the magnetic poles 12a to 12f of the iron core 12 are arranged in the order of the magnetic pole 12a, the magnetic pole 12c, the magnetic pole 12e, the magnetic pole 12b, the magnetic pole 12d, and the magnetic pole 12f along the U-shape of the U-shaped iron core.

By using a plurality of iron cores 12 according to the present modification, it is possible to configure a magnetic field generation device having features similar to those of the magnetic field generation device 1. Unlike a magnetic field generation device using a ring-shaped iron core, the magnetic field generation device configured as described above has an open side surface. Thus, the magnetic field generation device can be easily installed in a vortex chamber, a mold, or the like in which the molten metal to be driven exists, or the magnetic field generation device installed in the vortex chamber, the mold, or the like can be easily removed.

Note that the shape of the iron core used in the magnetic field generation device according to the first embodiment is not limited to the iron cores 11 and 12 as long as the iron core includes a plurality of magnetic poles protruding toward the center.

### <Continuous Casting System>

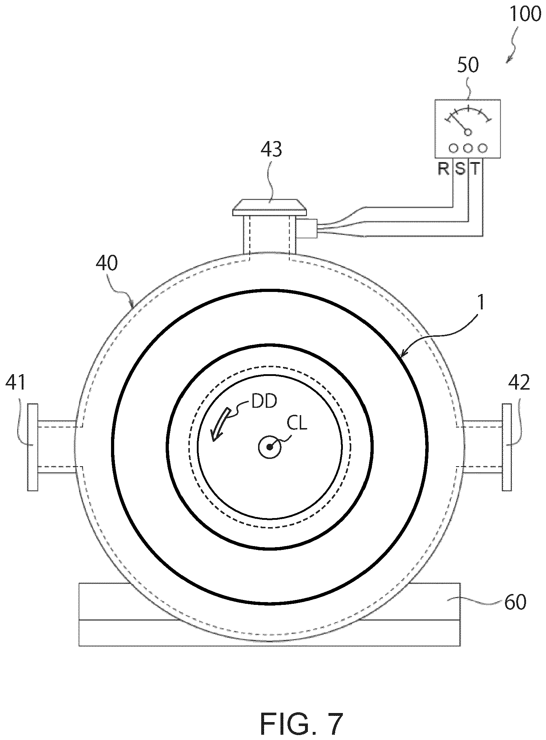

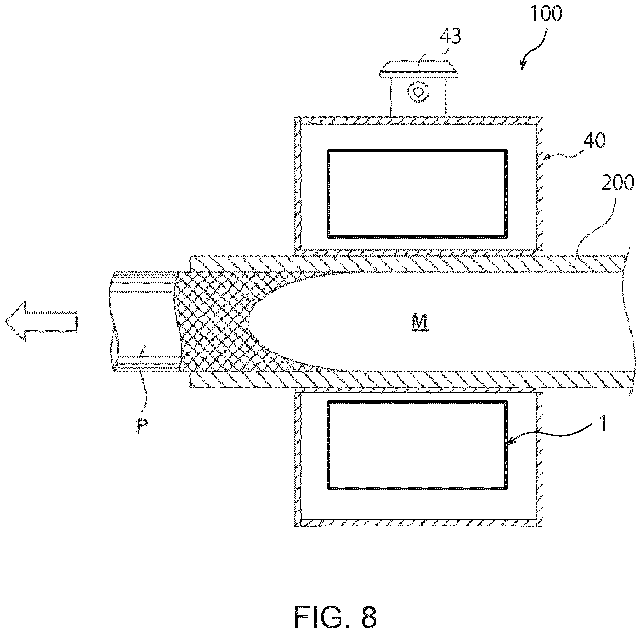

Next, a molten metal drive system (continuous casting system) 100 including the magnetic field generation device 1 according to the first embodiment will be described with reference to Figs. 7 and 8. Fig. 7 is a front view of the molten metal drive system 100, and Fig. 8 is a partial longitudinal sectional view of the molten metal drive system 100. Note that, in Fig. 7, the mold 200 is omitted. Further, reference sign CL in Fig. 7 represents central axes of the magnetic field generation device 1 and the case 40.

As described below, the molten metal drive system 100 is configured to receive the supply of the molten metal M and cool the molten metal M to take out the cast product P in the solid phase state.

The molten metal drive system 100 includes a magnetic field generation device 1, a case 40 that houses the magnetic field generation device 1, an AC power supply 50 that outputs an AC current to the magnetic field generation device 1, an attachment base 60 for supporting and fixing the case 40, and a cylindrical mold 200 provided so as to be inserted into a through hole of the case 40.

The magnetic field generation device 1 is arranged so that the central axes of the plurality of iron cores 11 coincide with the central axis of the mold 200.

The case 40 is configured to house the magnetic field generation device 1. The material of the case 40 is not particularly limited, and is constituted by, for example, a refractory material or metal such as stainless steel.

As illustrated in Fig. 7, the case 40 includes an air inlet 41 and an air outlet 42. The air inlet 41 is provided to take air for cooling the magnetic field generation device 1 into the case 40. The air outlet 42 is provided to discharge the air in the case 40 to the outside. In the present embodiment, the air inlet 41 is configured as a connection flange of a cold air supply air duct. Thus, a blower (not illustrated) can be connected to the air inlet 41, and the magnetic field generation device 1 can be forcibly air-cooled.

Further, as illustrated in Fig. 7, the air inlet 41 and the air outlet 42 are disposed so as to sandwich the plurality of iron cores 11 along a direction orthogonal to the central axes of the plurality of iron cores 11. In the present embodiment, the air inlet 41 and the air outlet 42 are provided on the surfaces of the case 40 facing each other. Thus, the cooling air taken into the case 40 from the air inlet 41 passes through the void between the plurality of iron cores 11 and is then discharged from the air outlet 42. Since the cooling air is discharged from the air outlet 42 after efficiently cooling the plurality of iron cores 11 in this way, the cooling efficiency of the magnetic field generation device 1 can be greatly increased.

The case 40 is provided with a terminal box (terminal box) 43. The terminal box 43 houses a terminal post (not illustrated). The terminal post is electrically connected to the coils 21 to 26 of the magnetic field generation device 1.

The AC power supply 50 is a three-phase AC power supply, and outputs three-phase (R-phase, S-phase, and T-phase) AC currents to the coils 21 to 26 of the magnetic field generation device 1. More specifically, the AC power supply 50 outputs an R-phase current to the coil 21 and the coil 22 connected in series, outputs an S-phase current to the coil 23 and the coil 24 connected in series, and outputs a T-phase current to the coil 25 and the coil 26 connected in series.

Note that the AC power supply 50 may be configured to vary an output current and/or a frequency by an inverter or the like in order to adjust a driving force of the molten metal. The frequency is, for example, about 5 Hz to 20 Hz.

The mold 200 receives supply of the molten metal M in a liquid phase state from the inlet side, and discharges the cast product P in a solid phase state from the outlet side by cooling. The mold 200 of the present embodiment has a cylindrical shape. The cylindrical mold 200 is arranged so that its central axis coincides with the central axis of the magnetic field generation device 1 (iron core 11). Note that, in a case where the cast product is a slab, a square cylindrical mold is used.

The mold 200 is constituted by a refractory material. In the case of being constituted by graphite, graphite is soft in terms of material, so that a cast product having a smoother surface can be obtained. Further, the mold 200 has a water jacket (not illustrated) for cooling the molten metal M flowing into the mold 200. The cooling water is circulated in the water jacket, and the outer periphery of the mold 200 is cooled by the cooling water. Thus, the molten metal M is rapidly cooled. Note that, as the water jacket, a water jacket having various known structures can be employed.

In the molten metal drive system 100, by supplying the three-phase alternating current to the magnetic field generation device 1, a magnetic field rotating about the central axis CL is generated in the mold 200. This rotating magnetic field generates an eddy current in the unsolidified molten metal in the mold 200, and the molten metal M is stirred around the central axis CL as indicated by a driving direction DD. Then, the stirred molten metal is cooled by the water jacket, whereby a uniform and high-quality cast product P is obtained.

### (Second Embodiment)

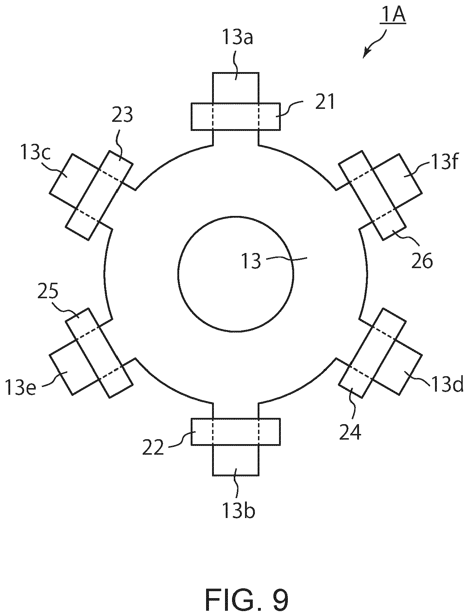

Next, a magnetic field generation device 1A according to a second embodiment will be described with reference to Fig. 9. Fig. 9 is a plan view of the magnetic field generation device 1A according to the present embodiment. One of differences between the first embodiment and the second embodiment is that the magnetic poles of the iron core are provided inward and the rotating magnetic field is formed inside the iron core in the first embodiment, whereas the magnetic poles of the iron core are provided outward and the rotating magnetic field is formed outside the iron core in the second embodiment.

Hereinafter, the second embodiment will be described focusing on the above difference.

The magnetic field generation device 1A includes a plurality of iron cores 13 and a plurality of coils 21, 22, 23, 24, 25, and 26 arranged at gaps from each other.

The iron cores 13 are ring-shaped iron cores constituted by a ferromagnetic material, and arranged along the central axis direction. Note that the material of the iron core 13 is similar to that of the iron core 11.

As illustrated in Fig. 9, each iron core 13 includes a plurality of magnetic poles 13a, 13b, 13c, 13d, 13e, and 13f protruding outward from an outer peripheral surface of the ring-shaped iron core. These magnetic poles are radially provided. In each iron core 13, the magnetic pole 13a and the magnetic pole 13b extend in opposite directions, the magnetic pole 13c and the magnetic pole 13d extend in opposite directions, and the magnetic pole 13e and the magnetic pole 13f extend in opposite directions. The magnetic pole 13a and the magnetic pole 13b correspond to the R-phase, the magnetic pole 13c and the magnetic pole 13d correspond to the S-phase, and the magnetic pole 13e and the magnetic pole 13f correspond to the T-phase.

Similarly to the case of the iron core 13 of the first embodiment, the plurality of iron cores 11 is arranged so that the central axes thereof coincide with each other while being arranged at gaps from each other. Note that, although not illustrated, the plurality of iron cores 13 is fixed at predetermined gaps by spacers, bolts and nuts, fixing jigs, or the like.

The plurality of magnetic poles 13a included in the plurality of iron cores 13 is arranged along a predetermined direction (central axis direction) to constitute a magnetic pole group (first magnetic pole group). Similarly, the magnetic poles 13b to 13f also constitute respective magnetic pole groups (second to sixth magnetic pole groups) similarly to the magnetic pole 13a.

Note that, although not illustrated, in the present embodiment as in the first embodiment, the gap between the iron cores 13 is substantially the same as or slightly larger than the thickness of the iron core 13, and the ratio of the gap to the thickness is equal to or more than 1. Thus, similarly to the first embodiment, the total amount of the iron core of the magnetic field generation device 1A can be reduced to half or less. Furthermore, by providing a gap between the iron cores, the heat dissipation of the magnetic field generation device 1A can be enhanced.

The coil 21 is wound around the first magnetic pole group. Similarly, the coil 22 is wound around the second magnetic pole group, the coil 23 is wound around the third magnetic pole group, the coil 24 is wound around the fourth magnetic pole group, the coil 25 is wound around the fifth magnetic pole group, and the coil 26 is wound around the sixth magnetic pole group.

The connection of the coils 21 to 26 is the same as that of the first embodiment, and during the operation of the magnetic field generation device 1A, an R-phase current flows through the coils 21 and 22, an S-phase current flows through the coils 23 and 24, and a T-phase current flows through the coils 25 and 26. Thus, a magnetic field (rotating magnetic field) rotating around the central axis of the iron core 13 is generated outside the magnetic field generation device 1A.

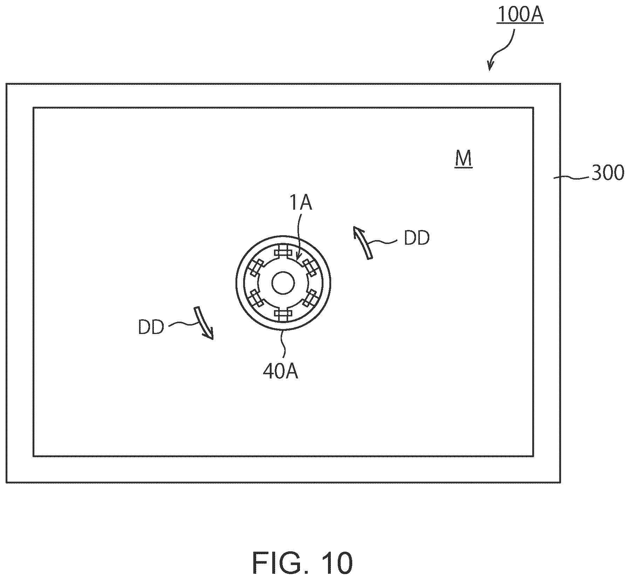

As described above, the magnetic field generation device 1A is driven by the three-phase AC power supply, and is configured to generate a rotating magnetic field outside the magnetic field generation device 1A. When the magnetic field generation device 1A is used, a molten metal to be driven is arranged outside a core assembly constituted by a plurality of iron cores 13. An application example of the magnetic field generation device 1A will be described later with reference to Fig. 10.

### (Operation and Effect of Magnetic Field Generation Device 1A)

As described above, in the magnetic field generation device 1A, the plurality of iron cores 13 having the plurality of magnetic poles 13a to 13f protruding outward is arranged at gaps from each other. As in the first embodiment, the coils 21 to 26 is provided so as to surround each of the first to sixth magnetic pole groups. Similarly to the magnetic field generation device 1, although there is a void between the iron cores 13, the magnetic field generation device 1A can generate a magnetic field having strength of the same degree as that in the case of using the conventional solid iron core. Further, since there is a void between the iron cores 13, the effects A to C described in the first embodiment can be obtained.

Note that, also in the second embodiment, the shape of the iron core is not limited to the ring shape, and may be, for example, a U shape.

### <Molten Metal Stirring System>

Next, a molten metal drive system (molten metal stirring system) 100A including a magnetic field generation device 1A according to the second embodiment will be described with reference to Fig. 10. Fig. 10 is a plan view of the molten metal drive system 100A.

The molten metal drive system 100A includes a magnetic field generation device 1A, a case 40A that houses the magnetic field generation device 1A, and a furnace 300 for storing a hot molten metal.

The case 40A is configured to house the magnetic field generation device 1A, and is a bottomed cylindrical case constituted by a refractory material in the present embodiment.

The furnace 300 is, for example, a melting furnace for melting a non-ferrous metal such as aluminum or a holding furnace for holding a hot molten metal. Note that the non-ferrous metal may be, for example, Al, Cu, and Zn, or an alloy of at least two of these, or a Mg alloy.

As illustrated in Fig. 10, in the molten metal drive system 100A, the case 40A in which the magnetic field generation device 1A is housed is arranged in the molten metal M of the furnace 300. In the present embodiment, the case 40A is arranged so that the upper opening of the case 40A is exposed from the hot water surface. Similarly to the first embodiment, the magnetic field generation device 1A is electrically connected to the external AC power supply 50.

In the molten metal drive system 100A described above, by supplying the three-phase alternating current to the magnetic field generation device 1A, a magnetic field rotating around the central axis of the iron core 13 is generated outside the case 40A. This rotating magnetic field generates an eddy current in the molten metal M in the furnace 300, and the molten metal M is stirred around the central axis as indicated by the driving direction DD.

Note that, in the molten metal stirring system 100A, the arrangement position of the case 40A (magnetic field generation device 1A) is arbitrary. In addition, a plurality of cases 40A housing the magnetic field generation device 1A may be arranged under the furnace 300.

### (Third Embodiment)

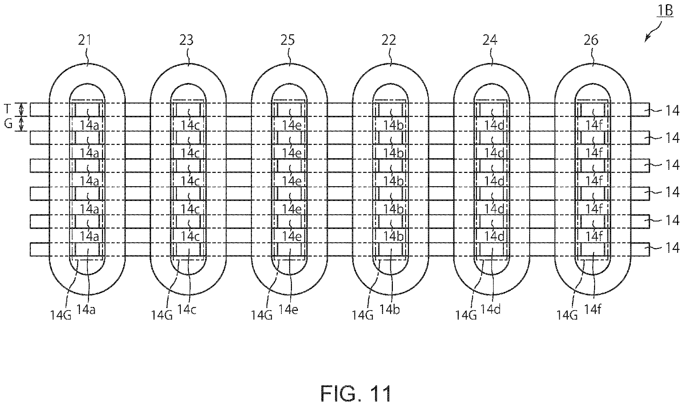

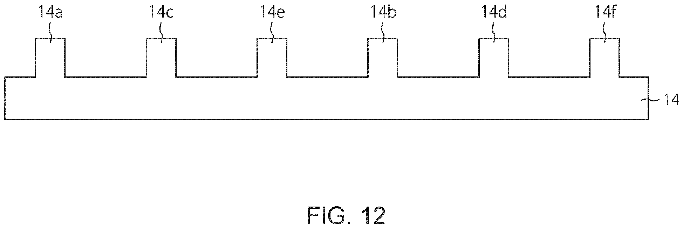

Next, a magnetic field generation device 1B according to a third embodiment will be described with reference to Figs. 11 and 12. Fig. 11 is a plan view of a magnetic field generation device 1B according to the present embodiment, and Fig. 12 is a side view of an iron core 14 used in the magnetic field generation device 1B. One of differences between the third embodiment and the first and second embodiments is that the iron core is annular or U-shaped in the first and second embodiments, whereas the iron core is linear in the third embodiment, and a magnetic field moving along the extending direction of the linear iron core is formed.

Hereinafter, a third embodiment will be described focusing on the above difference.

As illustrated in Fig. 11, the magnetic field generation device 1B includes a plurality of iron cores 14 and a plurality of coils 21, 22, 23, 24, 25, and 26 arranged at gaps from each other. Note that, although not illustrated, the plurality of iron cores 14 is fixed at predetermined gaps by spacers, bolts and nuts, fixing jigs, or the like.

The plurality of iron cores 14 is linear iron cores constituted by a ferromagnetic material, and is arranged along a direction orthogonal to an extending direction (extending direction) of each iron core 14. Note that the material of the iron core 14 is similar to that of the iron cores 11 to 13.

As illustrated in Fig. 12, each iron core 14 includes a plurality of magnetic poles 14a, 14b, 14c, 14d, 14e, and 14f protruding from the linear iron core in the same direction. The magnetic pole 14a and the magnetic pole 14b correspond to the R-phase, the magnetic pole 14c and the magnetic pole 14d correspond to the S-phase, and the magnetic pole 14e and the magnetic pole 14f correspond to the T-phase.

In each iron core 14, as illustrated in Fig. 11, the plurality of magnetic poles 14a, 14b, 14c, 14d, 14e, and 14f is provided in the order of the magnetic pole 14a, the magnetic pole 14c, the magnetic pole 14e, the magnetic pole 14b, the magnetic pole 14d, and the magnetic pole 14f in the extending direction of the linear iron core. Note that a required number of magnetic poles may be arranged according to the size of the furnace in which the magnetic field generation device 1B is installed, the conveyance distance of the molten metal, and the like, using the six magnetic poles 14a to 14f as one unit.

As illustrated in Fig. 11, the plurality of magnetic poles 14a included in the plurality of iron cores 14 is arranged along a predetermined direction (thickness direction of iron core 14) to constitute a magnetic pole group 14G (first magnetic pole group). Similarly, the magnetic poles 14b to 14f also constitute the magnetic pole group 14G (second to sixth magnetic pole groups), similarly to the magnetic pole 14a.

Note that, as illustrated in Fig. 11, in the present embodiment, the gap G between the iron cores 14 is substantially the same as or slightly larger than the thickness T of the iron core 14, and the ratio (G/T) of the gap G to the thickness T is equal to or more than 1. Thus, similarly to the first embodiment, the total amount of the iron core of the magnetic field generation device 1B can be reduced to half or less. Furthermore, by providing the gap G, the heat dissipation of the magnetic field generation device 1B can be enhanced.

The coil 21 is wound around the first magnetic pole group. Similarly, the coil 22 is wound around the second magnetic pole group, the coil 23 is wound around the third magnetic pole group, the coil 24 is wound around the fourth magnetic pole group, the coil 25 is wound around the fifth magnetic pole group, and the coil 26 is wound around the sixth magnetic pole group.

The connection of the coils 21 to 26 is the same as that of the first embodiment, and during the operation of the magnetic field generation device 1B, an R-phase current flows through the coils 21 and 22, an S-phase current flows through the coils 23 and 24, and a T-phase current flows through the coils 25 and 26. Thus, a magnetic field moving in the extending direction of the iron core 14 is generated in the upper portion of the magnetic field generation device 1B.

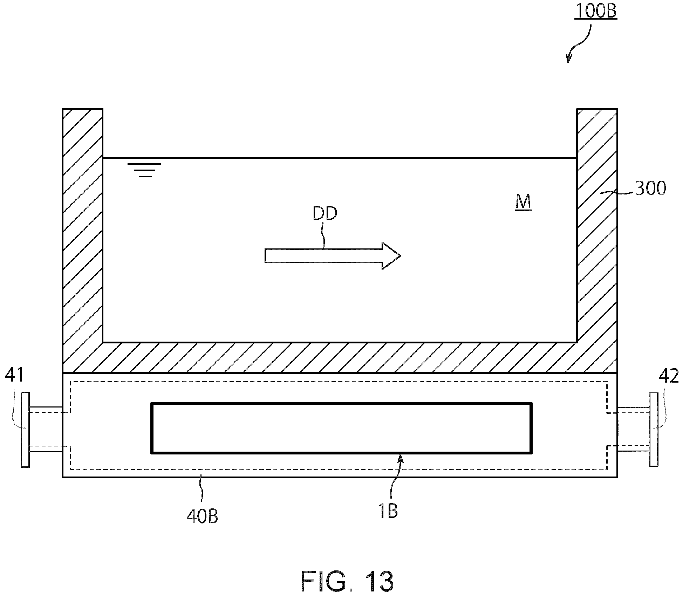

As described above, the magnetic field generation device 1B is driven by the three-phase AC power supply, and is configured to generate a magnetic field moving in a predetermined direction on the magnetic field generation device 1B. When the magnetic field generation device 1A is used, a molten metal to be driven is arranged on the magnetic field generation device 1B. An application example of the magnetic field generation device 1B will be described later with reference to Fig. 13.

### (Operation and Effect of Magnetic Field Generation Device 1B)

As described above, in the magnetic field generation device 1B, the plurality of iron cores 14 having the plurality of magnetic poles 14a to 14f protruding from the linear iron core in the same direction is arranged at gaps from each other in the width direction of the iron core. Then, as in the first and second embodiments, the coils 21 to 26 is provided so as to surround each of the first to sixth magnetic pole groups. Similarly to the magnetic field generation devices 1 and 1A, although there is a void between the iron cores 14, the magnetic field generation device 1B can generate a magnetic field having strength of the same degree as that in the case of using the conventional solid iron core. Since there is a void between the iron cores 14, the effects A to C described in the first embodiment can be obtained.

Note that the shape of the iron core 14 is not limited to a linear shape, and may be partially curved or the like according to the conveying direction of the molten metal or the like.

### <Molten Metal Stirring System>

Next, a molten metal drive system (molten metal stirring system) 100B including the magnetic field generation device 1B according to the third embodiment will be described with reference to Fig. 13. Fig. 13 is a partial longitudinal sectional view of the molten metal drive system 100B.

The molten metal drive system 100B includes the magnetic field generation device 1B, a case 40B that houses the magnetic field generation device 1B, and the furnace 300 installed on the case 40B.

The case 40B is configured to house the magnetic field generation device 1B, and is a substantially rectangular parallelepiped case constituted by a refractory material in the present embodiment. The case 40B includes an air inlet 41 and an air outlet 42. The air inlet 41 and the air outlet 42 are disposed so as to sandwich the plurality of iron cores 14 along the direction in which the plurality of iron cores 14 extend. In the present embodiment, the air inlet 41 and the air outlet 42 are provided on the surfaces of the case 40B facing each other. Thus, the cooling air taken into the case 40B from the air inlet 41 passes through the void between the plurality of iron cores 14 and then is discharged from the air outlet 42, so that the cooling efficiency of the magnetic field generation device 1B can be greatly increased.

As illustrated in Fig. 13, in the molten metal drive system 100B, the case 40B in which the magnetic field generation device 1B is housed is arranged under the furnace 300. Similarly to the first embodiment, the magnetic field generation device 1B is electrically connected to the external AC power supply 50.

In the molten metal stirring system 100B, by supplying the three-phase alternating current to the magnetic field generation device 1B, a magnetic field moving along a direction substantially parallel to the extending direction of the iron core 14 is generated in the furnace 300. The molten metal M in the furnace 300 is driven along the driving direction DD by the moving magnetic field. The driven molten metal M hits a side wall of the furnace 300, spreads vertically and horizontally along the side wall, and then diffuses in a direction opposite to the driving direction. As a result, the molten metal M is stirred in the furnace 300.

Note that, when the size of the furnace 300 is larger than that of the magnetic field generation device 1B, a plurality of magnetic field generation devices 1B may be arranged below the furnace 300. For example, a plurality of magnetic field generation devices 1B may be arranged along the side wall of the furnace 300. Thus, since the molten metal M in the furnace 300 is driven along the side wall of the furnace 300, the molten metal M is efficiently stirred in the furnace 300.

In addition, the magnetic field generation device 1B may be arranged at a corner of the furnace 300 along a desired stirring direction.

### (Fourth Embodiment)

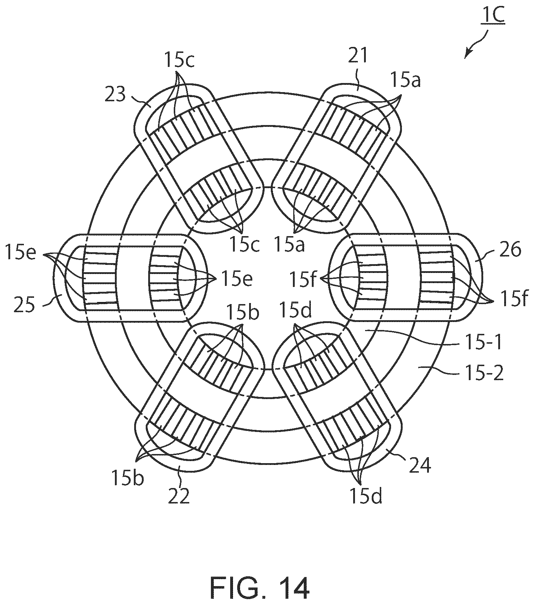

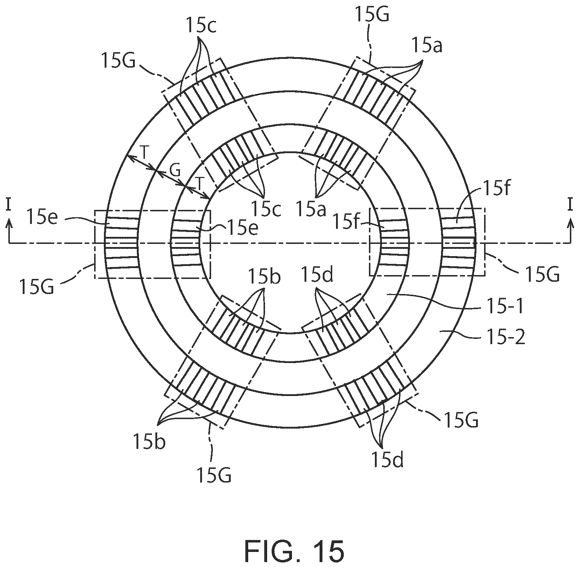

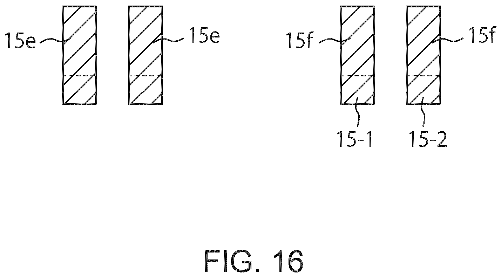

Next, a magnetic field generation device 1C according to a fourth embodiment will be described with reference to Figs. 14 to 16. Fig. 14 is a plan view of a magnetic field generation device 1C according to the present embodiment, Fig. 15 is a plan view of a plurality of coaxially arranged iron cores used in the magnetic field generation device 1C, and Fig. 16 is a cross-sectional view taken along line I-I of the disk-shaped iron core illustrated in Fig. 15.

One of differences between the fourth embodiment and the first and second embodiments is that a plurality of ring-shaped iron cores is arranged along the central axis direction in the first and second embodiments, whereas a plurality of ring-shaped iron cores having different sizes is concentrically arranged in the fourth embodiment.

Hereinafter, the fourth embodiment will be described focusing on the above difference.

As illustrated in Fig. 14, the magnetic field generation device 1C includes a plurality of iron cores 15-1 and 15-2 and a plurality of coils 21, 22, 23, 24, 25, and 26 arranged at gaps from each other.

The iron cores 15-1 and 15-2 are ring-shaped iron cores having different sizes from each other, and concentrically arranged. That is, the iron core 15-1 and the iron core 15-2 are arranged so that the central axes coincide with each other and are located in the same plane. Note that the number of iron cores is not limited to two, and may be three or more.

As illustrated in Figs. 15 and 16, both the iron core 15-1 and the iron core 15-2 include magnetic poles 15a, 15b, 15c, 15d, 15e, and 15f protruding in a fin shape in the same direction from an upper surface of the ring-shaped iron core. The magnetic pole 15a and the magnetic pole 15b correspond to the R-phase, the magnetic pole 15c and the magnetic pole 15d correspond to the S-phase, and the magnetic pole 15e and the magnetic pole 15f correspond to the T-phase.

In the present embodiment, three magnetic poles are provided. For example, three magnetic poles 15a are provided. These three magnetic poles are formed so as to radially extend from the central axis of the iron core but are not limited thereto, and may be provided in parallel to each other. In addition, the number of magnetic poles is not limited to three, and may be one, two, or four or more.

As illustrated in Fig. 15, the iron core 15-1 and the iron core 15-2 are positioned and fixed so that the magnetic pole of the iron core 15-1 and the magnetic pole of the iron core 15-2 are located on a straight line. Thus, the plurality of magnetic poles of the iron core 15-1 and the iron core 15-2 is arranged along a radial direction of the iron cores 15-1 and 15-2 to constitute a magnetic pole group 15G. Similarly to the embodiments described above, the iron cores 15-1 and 15-2 include six magnetic pole groups 15G (first to sixth magnetic pole groups).

Note that, although not illustrated, the plurality of iron cores 15-1 and 15-2 is fixed by spacers, bolts and nuts, fixing jigs, or the like.

As illustrated in Fig. 15, the first magnetic pole group constituted by the plurality of magnetic poles 15a and the second magnetic pole group constituted by the plurality of magnetic poles 15b are arranged symmetrically with respect to the centers of the iron cores 15-1 and 15-2. Similarly, the third magnetic pole group constituted by the plurality of magnetic poles 15c and the fourth magnetic pole group constituted by the plurality of magnetic poles 15d are arranged symmetrically with respect to the centers of the iron cores 15-1 and 15-2. The fifth magnetic pole group constituted by the plurality of magnetic poles 15e and the sixth magnetic pole group constituted by the plurality of magnetic poles 15f are arranged symmetrically with respect to the center of each of the iron cores 15-1 and 15-2.

As illustrated in Fig. 14, the coil 21 is wound around the first magnetic pole group. Similarly, the coil 22 is wound around the second magnetic pole group, the coil 23 is wound around the third magnetic pole group, the coil 24 is wound around the fourth magnetic pole group, the coil 25 is wound around the fifth magnetic pole group, and the coil 26 is wound around the sixth magnetic pole group.

Note that, as illustrated in Fig. 14, in the present embodiment, the gap G between the iron cores 15-1 and 15-2 is substantially the same as or slightly larger than the thickness T of the iron cores 15-1 and 15-2, and the ratio (G/T) of the gap G to the thickness T is equal to or more than 1. Thus, similarly to the first embodiment, the total amount of the iron core of the magnetic field generation device 1C can be reduced to half or less. Furthermore, by providing the gap G, the heat dissipation of the magnetic field generation device 1C can be enhanced.

The connection of the coils 21 to 26 is the same as that of the first embodiment, and during the operation of the magnetic field generation device 1C, an R-phase current flows through the coils 21 and 22, an S-phase current flows through the coils 23 and 24, and a T-phase current flows through the coils 25 and 26. Thus, a magnetic field rotating around the central axes of the iron cores 15-1 and 15-2 is generated in the upper portion of the magnetic field generation device 1C.

### (Operation and Effect of Magnetic Field Generation Device 1C)

As described above, in the magnetic field generation device 1C, the plurality of ring-shaped iron cores including the plurality of magnetic poles 15a to 15f protruding upward is concentrically arranged at gaps from each other. Then, the coils 21 to 26 is provided so as to surround each of the first to sixth magnetic pole groups as in the embodiments described above. Similarly to the magnetic field generation devices 1, 1A, and 1B, although there is a void between the iron core 15-1 and the iron core 15-2, the magnetic field generation device 1C can generate a magnetic field having strength of the same degree as that in the case of using the conventional solid iron core. Further, since there is a void between the iron core 15-1 and the iron core 15-2, the effects A to C described in the first embodiment can be obtained.

### (Modification of Iron Core)

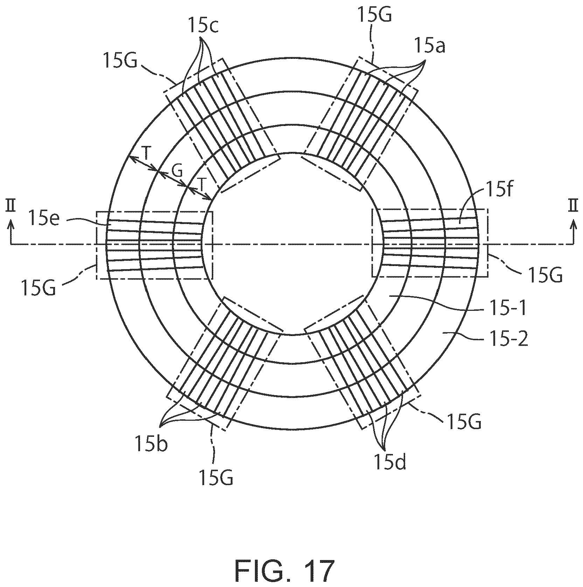

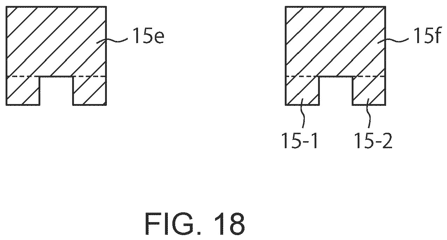

A modification of the iron core according to the fourth embodiment will be described with reference to Figs. 17 and 18.

In the present modification, as illustrated in Fig. 17, an iron core 15-1 and an iron core 15-2 are connected by magnetic poles. For example, as illustrated in Fig. 18, the magnetic pole 15e of the iron core 15-1 and the magnetic pole 15e of the iron core 15-2 are connected to form one magnetic pole 15e, and similarly, the magnetic pole 15f of the iron core 15-1 and the magnetic pole 15f of the iron core 15-2 are connected to form one magnetic pole 15f. In other words, the magnetic poles of the same magnetic pole group of each iron core are connected to each other.

According to this modification, since each magnetic pole also functions as a coupling member for coupling the iron core 15-1 and the iron core 15-2, it is possible to eliminate the need for a fastening member and a fixing jig for fixing the plurality of iron cores 15-1 and 15-2.

### <Molten Metal Stirring System>

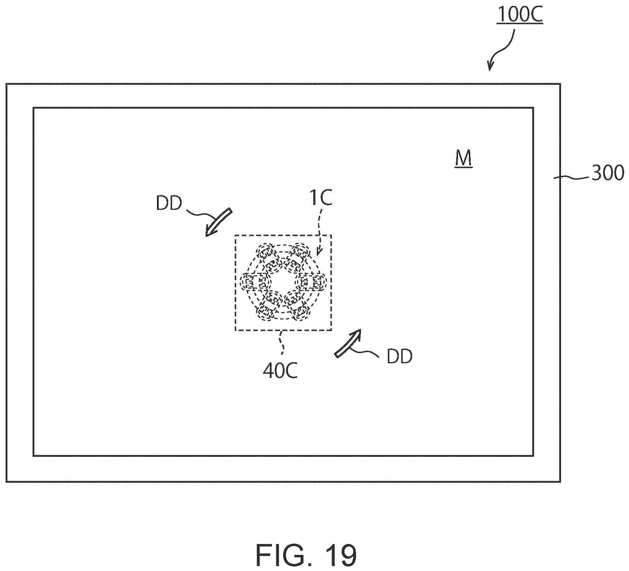

Next, a molten metal drive system (molten metal stirring system) 100C including the magnetic field generation device 1C according to the fourth embodiment will be described with reference to Fig. 19. Fig. 19 is a plan view of the molten metal drive system 100C.

The molten metal drive system 100C includes the magnetic field generation device 1C, a case 40C that houses the magnetic field generation device 1C, and the furnace 300 installed on the case 40C.

The case 40C is configured to house the magnetic field generation device 1C, and is constituted by, for example, a refractory material. Similar to the case 40B of the third embodiment, the case 40C may include an air inlet 41 and an air outlet 42.

As illustrated in Fig. 19, in the molten metal drive system 100C, the case 40C in which the magnetic field generation device 1C is housed is arranged under the furnace 300. Similarly to the first embodiment, the magnetic field generation device 1C is electrically connected to the external AC power supply 50.

In the molten metal stirring system 100C, by supplying the three-phase alternating current to the magnetic field generation device 1C, a magnetic field rotating around the central axes of the iron cores 15-1 and 15-2 is generated in the furnace 300. The molten metal M in the furnace 300 is driven along the driving direction DD by the rotating magnetic field, and the molten metal M is stirred around the central axis.

Note that, in the molten metal stirring system 100C, the arrangement position of the case 40C (magnetic field generation device 1C) is arbitrary. In addition, a plurality of cases 40C housing the magnetic field generation device 1C may be arranged under the furnace 300. Further, the magnetic field generation device 1C may be arranged not only under the furnace but also on a side wall of the furnace.

Based on the above description, those skilled in the art may conceive additional effects and various modifications of the present invention, but the aspects of the present invention are not limited to the embodiments described above. Various additions, changes and partial deletions are possible without departing from the conceptual idea and spirit of the present invention derived from the contents defined in the claims and the equivalents thereof.

### REFERENCE SIGNS LIST

1, 1A, 1B, 1C Magnetic field generation device
11, 12, 13, 14, 15-1, 15-2 Iron core
11a Magnetic pole
11G, 14G, 15G Magnetic pole group
21 to 26 Coil
31 Bolt (for fixing)
32 Nut
33 Spacer
40, 40A, 40B, 40C Case
41 Air inlet
42 Air outlet
43 Terminal box
50 AC power supply
60 Attachment base
100, 100A, 100B, 100C Molten metal drive system
200 Mold
300 Furnace
CH Center hole
CL Central axis
DD Driving direction
G Gap
H Through hole
M Molten metal
P Cast product
T Thickness

## Claims

1. A magnetic field generation device comprising:
a plurality of iron cores each having first to sixth magnetic poles and arranged at gaps from each other;
first and second coils for energizing an R-phase current;
third and fourth coils for energizing an S-phase current; and
fifth and sixth coils for energizing a T-phase current, wherein
a plurality of the first magnetic poles included in the plurality of iron cores is arranged along a predetermined direction to constitute a first magnetic pole group,
a plurality of the second magnetic poles included in the plurality of iron cores is arranged along the direction to constitute a second magnetic pole group,
a plurality of the third magnetic poles included in the plurality of iron cores is arranged along the direction to constitute a third magnetic pole group,
a plurality of the fourth magnetic poles included in the plurality of iron cores is arranged along the direction to constitute a fourth magnetic pole group,
a plurality of the fifth magnetic poles included in the plurality of iron cores is arranged along the direction to constitute a fifth magnetic pole group,
a plurality of the sixth magnetic poles included in the plurality of iron cores is arranged along the direction to constitute a sixth magnetic pole group,
the first coil is wound around the first magnetic pole group,
the second coil is wound around the second magnetic pole group,
the third coil is wound around the third magnetic pole group,
the fourth coil is wound around the fourth magnetic pole group,
the fifth coil is wound around the fifth magnetic pole group, and
the sixth coil is wound around the sixth magnetic pole group.

2. The magnetic field generation device according to claim 1, wherein
the iron cores are ring-shaped iron cores and arranged along a central axis direction,
the first to sixth magnetic poles of each of the iron cores protrude from an inner peripheral surface of the ring-shaped iron core toward a center, and
the first magnetic pole and the second magnetic pole face each other, the third magnetic pole and the fourth magnetic pole face each other, and the fifth magnetic pole and the sixth magnetic pole face each other.

3. The magnetic field generation device according to claim 1, wherein
the iron cores are U-shaped iron cores and arranged along a central axis direction,
the first to sixth magnetic poles of each of the iron cores protrude inward from an inner surface of the U-shaped iron core, and
the first to sixth magnetic poles are arranged in an order of the first magnetic pole, the third magnetic pole, the fifth magnetic pole, the second magnetic pole, the fourth magnetic pole, and the sixth magnetic pole.

4. The magnetic field generation device according to claim 1, wherein
the iron cores are ring-shaped iron cores and arranged along a central axis direction,
the first to sixth magnetic poles of each of the iron cores protrude outward from an outer peripheral surface of the ring-shaped iron core, and
the first magnetic pole and the second magnetic pole extend in opposite directions to each other, the third magnetic pole and the fourth magnetic pole extend in opposite directions to each other, and the fifth magnetic pole and the sixth magnetic pole extend in opposite directions to each other.

5. The magnetic field generation device according to claim 1, wherein
the iron cores are linear iron cores and arranged along a direction orthogonal to an extending direction of the iron cores, and
the first to sixth magnetic poles of each of the iron cores protrude from the linear iron core in a same direction.

6. The magnetic field generation device according to claim 1, wherein
the iron cores are ring-shaped iron cores having different sizes and concentrically arranged,
the first to sixth magnetic poles of each of the iron cores protrude from the ring-shaped iron core in a same direction,
the first magnetic pole group and the second magnetic pole group are arranged with a center of each of the iron cores interposed therebetween,
the third magnetic pole group and the fourth magnetic pole group are arranged with the center interposed therebetween, and
the fifth magnetic pole group and the sixth magnetic pole group are arranged with the center interposed therebetween.

7. The magnetic field generation device according to claim 6, wherein magnetic poles of a same magnetic pole group of each of the iron cores are connected to each other.

8. The magnetic field generation device according to any one of claims 1 to 7, wherein a ratio of a gap between the iron cores to a thickness of the iron core is equal to or more than 0.1 and equal to or less than 2.

9. The magnetic field generation device according to claim 8, wherein the ratio is equal to or more than 1.

10. The magnetic field generation device according to any one of claims 1 to 9, wherein the plurality of iron cores is constituted by a carbon steel sheet.

11. The magnetic field generation device according to any one of claims 1 to 10, wherein the first coil and the second coil are connected in series to form a first series coil, the third coil and the fourth coil are connected in series to form a second series coil, the fifth coil and the sixth coil are connected in series to form a third series coil, and the first series coil, the second series coil, and the third series coil are star-connected.

12. A molten metal drive system for driving a molten metal, the molten metal drive system comprising:
the magnetic field generation device according to any one of claims 1 to 11;
a case that houses the magnetic field generation device; and
an AC power supply that outputs an AC current to the first to sixth coils.

13. The molten metal drive system according to claim 12, wherein
the case is provided with an air inlet for taking air into the case and an air outlet for discharging air in the case to the outside, and
the air inlet and the air outlet are disposed so as to sandwich the magnetic field generation device.
